# EUROPEAN PATENT APPLICATION

(11) **EP 1 289 330 A2**
(43) Date of publication of application: **05.03.2003**
(21) Application number: 02014520.7
(22) Date of filing: 01.07.2002
(51) Int. Cl.: H04Q 7/38

(54) **Radio transceiver unit and a system for control and application of communications**

(30) Priority: 01.09.2001 GB 0121236
(71) Applicant: MOTOROLA, INC., Schaumburg, IL 60196 (US)
(72) Inventor: Nocham, Gabriela, Tel Aviv 69411 (IL); Shahaf, Mark, Ashdod 77642 (IL); Carmon, Rafy, Rishon Lezion 75676 (IL)
(74) Representative: McCormack, Derek James

(57) **Abstract**

A radio transceiver unit for use in a radio communications system and operable in a direct mode of operation (DMO), the radio transceiver unit comprising: means for receiving encrypted information including a communication encryption key for use in direct mode communications;
means for processing the received encrypted information to derive the encryption key included therein; and means for conducting encrypted direct mode operation using the communication encryption key.

A system including a processor and a method of operating the system to provide the encrypted information to enable a user to undertake secure DMO communications is also disclosed.

## Description

### Field of the Invention

This invention relates to a radio transceiver unit and a system for control and application of communications, particularly for use in a direct mode of operation.

### Background of the Invention

Mobile radio communications systems may operate in one of two modes: trunked mode of operation (TMO) and direct mode of operation (DMO). TMO communications use the infrastructure supplied by the operator, e.g. base transceiver stations, where the operator charges fees for the use (by means of airtime, fixed price, features oriented fees, etc.). TMO operators provide a service in which it is possible to encrypt the communication signals, so that the user has privacy during the calls. Users of this service generally purchase the service from an operator, e.g. by purchasing secure talk time from the operator for use via the TMO system infrastructure.

The DMO is a method that provides the capability of direct communication between two or more radio units without any operator's infrastructure. Operators, therefore, are typically not interested in supplying users with that service, since there is no mechanism to control its usage and to collect fees for its use.

Furthermore, any clear conversation in DMO can be heard by anyone that is tuned to the same radio frequency without any further control.

Nevertheless, it is desirable to provide DMO for users who intend to be outside the coverage range of the TMO infrastructure, or for short range communications in overloaded areas. Unfortunately, for such users who are familiar with the TMO services and who desire secure communications by encryption even when communicating in DMO, no facilities for such secure DMO communications are available.

There are several procedures and technologies currently used for provisioning prepaid radio communications services from an operator. The main ones are as follows:
- Callcard - where the user buys airtime (phone time) and enters a number. By doing that the user activates a counter in the infrastructure that controls the time available and time left. Once the time has expired the system disables the service and the user needs to buy another card. This is an infrastructure-based solution, suitable only when the user is in the coverage range of the system. It is obviously not suitable for secure DMO provisioning.
- SIMcard at GSM - the user buys a board, where one of the parameters stored on board is the amount of time the user has bought. Once the bought time has been used, the card is disposed of. The disadvantage of this approach is that the SimCard cannot be specifically configured for a specific user or group and therefore this approach is also not suitable for secure DMO.

Another disadvantage of the known provisioning procedures is that these procedures require the user to buy the calling card, or to go to a service station to program the radio or to buy a SIM card and then program the data again (e.g. if the user's identification stored on the previous card has been lost and so must be re-programmed on a new card).

Thus, a need exists for provision of secure DMO communications between mobile radio transceiver units, especially units which can also operate by TMO, and preferably a new method and system for provisioning services which can be used in relation to DMO communications.

In the prior art, secure communications between mobile units is described in various references, e.g.
WO-A-96/18269, US-A-5235432 and US-A-6137885, but operation as in the invention now to be described is not disclosed or suggested in the prior art.

### Summary of Invention

According to the present invention in a first aspect there is provided a radio transceiver unit for use in a radio communications system and operable in a direct mode of operation, DMO, the radio unit comprising:
means for receiving encrypted information including a communication encryption key for use in DMO communications;
means for processing the received encrypted information to derive the encryption key included therein; and
means for conducting encrypted DMO operation using the communication encryption key
wherein the encrypted information received and processed by the unit includes a code which is unique to that unit whereby only that unit may extract the communication encryption key and wherein the unit is operable using the key for use in direct mode operation for a cumulative time up to a pre-determined finite time of service.

The transceiver unit may be operable using the encryption key for use in direct mode operation only in a given operation period.

The radio transceiver unit according to the first aspect of the invention may be operable to communicate in DMO with one or more other radio transceiver units in a group permitted to use the communication encryption key and the unit may thus be operable to send to or receive from the other one or more units DMO communications encrypted or de-encrypted using the encryption key. The radio transceiver unit may for example be a dual mode transceiver which is operable in a trunked mode of operation (TMO) as well as in the DMO.

The code included in the received encrypted information may comprise an identification number of that unit. The encrypted information may include additional information indicating one or more of:
(i) at least one operating frequency;
(ii) a group identification, e.g. a number which must be used by the members of a group to identify one another and
(iii) a predetermined time of service for use in a predetermined operating period;
and the unit may be operable to extract the indicated information and to apply the extracted information in establishment of a direct mode communication and if appropriate to store the information.

The encrypted information received and processed by the radio transceiver unit may comprise information which has been put into a sealed key message by application of an algorithm by a remote processor, e.g. a computing device held at an operator provisioning centre. The radio transceiver unit may be operable, e.g. by a processor such as a digital signal processor contained within the unit, to apply an algorithm which is a reverse of that applied by the remote processor to extract the communication encryption key. The encryption key may be stored in a memory in the radio transceiver unit when it has been extracted. A signal indicating that the encryption key has been validly extracted may be issued by the processor and may for example indicated to the user on a display of the radio transceiver unit.

Encryption and de-encryption algorithms for embedding one or more codes in a number sequence and extracting the code(s) from the sequence are known per se and the algorithms employed by the remote processor and the radio transceiver unit according to the invention may comprise such known algorithms.

The radio transceiver unit according to the first aspect of the invention may employ as an input to the means for processing, in addition to the encrypted information, a provisioning key. Where an encryption key has been used in a previous service period, the provisioning key may comprise the encryption key for the previous service period as stored in a memory of the radio transceiver unit.

The radio transceiver unit according to the first aspect of the invention may conveniently be operable to hold in a memory within the unit a communication encryption key for use in DMO communications in a new or current service period as well as a communication encryption key for use in DMO communications in the service period immediately prior to the current or new period and to carry out DMO communications for a cumulative time up to a predetermined time of service during the new or current service period and the immediately prior service period.

The radio transceiver unit according to the first aspect of the invention may further include a display, e.g. a known electro-optical display, for indicating at least one of:
(i) the amount of time of a predetermined time of service authorised for encrypted direct mode operation by the unit which has already been used; and
(ii) the amount of time of a predetermined time of service authorised for encrypted direct mode operation use by the unit which still remains available.
(iii) the validity of entry of encrypted information containing a communication encryption key. Information provided to the display may be digital information provided by a processor within the radio transceiver unit.

The radio transceiver unit according to the first aspect of the invention may be such that the means for receiving the encrypted information comprises input key means, e.g. a keypad or keyboard (including either so called hard or soft keys) for entering the encrypted information as a set of characters.

The radio transceiver unit according to the first aspect of the invention may comprise as the means for conducting encrypted DMO communication a processor for using the current encryption key extracted as described earlier to convert signals representing input information applied by a user or from a peripheral device associated with the radio unit, e.g. signals representing speech or text data, into encrypted signals for transmission to one or more designated other radio units by encrypted DMO. The processor may operate in a known manner, e.g. by generating using the input encryption key and an input time stamp signal a crypto (key stream) sequence and applying the same to a signal combiner together with a signal representing the information in plain form to be converted by the signal combiner to an encrypted form. In one simple form the signal combiner may be an exclusive OR function operator (exclusive OR gate). The processor may be part of a common processing unit of the radio transceiver unit together with the processor for applying the reverse algorithm referred to earlier.

The radio transceiver unit according to the first aspect of the invention may for example be a unit whose processor(s) operate digitally. The unit may be one which is operable according to standard procedures of TETRA (explained further below).

According to the present invention in a second aspect there is provided a radio communications system comprising:
means for compiling for use by a designated radio transceiver unit of the system a sealed key message of encrypted information including a communication encryption key for use by the designated unit in direct mode communication;
and a radio transceiver unit operable to receive and
extract the encrypted information, wherein the radio transceiver unit is a unit according to the first aspect.

The system may include a plurality of radio transceiver units each of which is a unit according to the first aspect. The means for compiling and sending the sealed key message may be operable to apply an encryption algorithm known to the radio transceiver units whereby the designated radio transceiver unit to which the signal containing the encrypted message is directed is operable to apply a de-encryption algorithm corresponding to the encryption algorithm to extract the communication encryption code.

In accordance with a third aspect of the present invention there is provided a method for enabling encrypted direct mode operation in a communication system which is by operation of the system according to the second aspect.

It will be understood that the system, method and radio unit provided in accordance with the invention provide the following advantages:

The invention allows TMO operators to provide secure DMO to users for use in specified groups for various amount of service time at chargeable cost whilst ensuring the privacy of communications as in the TMO by means of encryption. Such a system is beneficial to both users and operators. In a preferred embodiment of the invention the radio transceiver units used in the system are dual mode (TMO/DMO) units which allows the users to communicate in either mode in a secure manner with only one device. within the system coverage without carrying two different devices. This has the benefit that if TMO communications are not possible because of the user's location, secure communications may still be carried out with the same unit using DMO. The radio transceiver unit may be operable in DMO to send communications in either an encrypted or uncrypted form as selected by the user.

In addition, the invention gives the operator flexibility and control over its services. By allowing the use of secure DMO secure services as an alternative to secure TMO services to its users, the operator may avoid significant overload on its service stations operating via TMO.

An additional benefit to the user is that the need to recall the radio is avoided. The provisioning service is very flexible in that a sealed key containing the encryption key required for secure DMO can be provided in a simple manner, e.g. by telephone, via the internet,by e-mail, by mail and so on. The user does not need to visit any service centre after the service has been established.

A system, method and radio unit for direct mode operation embodying the present invention will now be described, by way of example only, with reference to the accompanying drawings, in which:

### Brief description of the accompanying drawings

FIG. 1 shows a block schematic diagram illustrating a TETRA communication system adapted to support the various inventive concepts of a preferred embodiment of the present invention;
FIG. 2 shows a block schematic diagram illustrating an encryption key provisioning method embodying the present invention, used in the TETRA system of FIG. 1;
FIG. 3 is a schematic block circuit diagram illustrating a processor unit for use at a service provisioning centre to operates an algorithm to provide a sealed key for use in one of the radio units in the system of FIG. 2.
FIG 4 is a schematic block circuit diagram of a processor for use in one of the radio units of the system shown in Figure 2 for encrypting information using an encryption key extracted from a sealed key by the radio unit.

### Description of embodiments of the invention

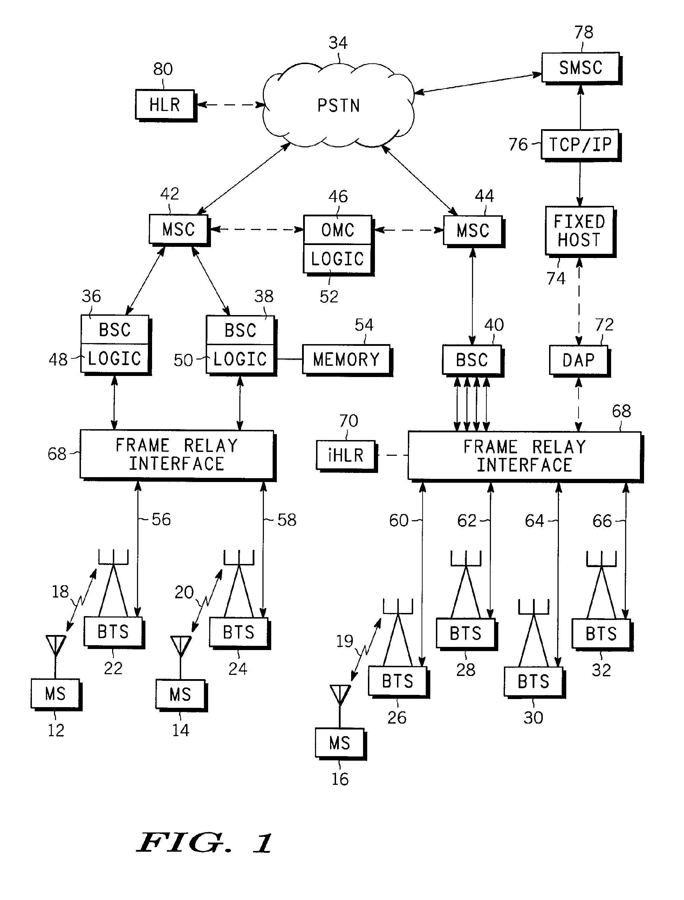

FIG. 1 shows, in outline, a trunked radio communications system 10 supporting a TETRA (Trans-European Trunked Radio) operational air interface procedure in accordance with an embodiment of the invention. The TETRA air interface procedure is a standard communications protocol which has been defined by the European Telecommunications Standards Institute (ETSI). Generally, the air-interface protocol is administered from base sites that are geographically spaced apart - one base site supporting a cell (or, for example, sectors of a cell) as shown in FIG. 1).

A plurality of subscriber units, such as a mixture of radio transceiver units or radios 12 to 16 and fixed terminals (not shown), communicate over the selected air-interface 18 to 20 with a plurality of base transceiver stations (BTS) 22 to 32. A limited number of radios 12 to 16 and BTSs 22 to 32 are shown for clarity purposes only. The BTSs 22 to 32 may be connected to a conventional public-switched telephone network (PSTN) 34 through base station controllers (BSC) 36 to 40 and mobile switching centres (MSC) 42 to 44.

Each BTS 22 to 32 is principally designed to serve its primary cell, with each BTS 22 to 32 containing one or more transceivers. The BTSs 22 to 32 communicate 56 to 66 with the rest of the trunking system infrastructure via a frame relay interface 68. In general, an iHLR function 70 communicates directly with the dispatch application processor (DAP) 72. The iHLR function 70 is the database for all subscribers with respect to dispatch (half duplex) services.

Each BSC 36 to 40 may control one or more BTSs 22 to 32, with BSCs 36 to 40 generally interconnected through MSCs 42 to 44. Each BSC 36 to 40 is therefore able to communicate with any other BSC, if desired, to pass system administration information therebetween, with BSCs 36 to 40 responsible for establishing and maintaining control channel and traffic channels to serviceable MSs 12 to 16 affiliated therewith. The interconnection of BSCs 36 to 40 therefore allows the trunked radio communication system to support handover of the MSs 12 to 16 between cells.

Each MSC 42 to 44 provides a gateway to the PSTN 34, with MSCs 42 to 44 interconnected through an operations and management centre (OMC) that administers general control of the trunked radio system 10, as will be understood by those skilled in the art. The various system component installations, such as BSCs 36 to 38 and OMC 46, will include control logic 48 to 52, with the various system elements usually having associated memory 54 (shown only in relation to BSC 38 for the sake of clarity). The memory typically stores historically compiled operational data as well as in-call data, system information and control algorithms.

In addition to the connections to the PSTN 34 (or SS7 in a cellular network), the radios 12 to 16 and BTSs 22 to 32 can obtain system specific information via the DAP 72. The DAP 72 is the dispatch primary control network element, which, amongst other functions, manages the services, provisioning, location management and billing of dispatch-type services.

The DAP 72 may be connected to a fixed host 74 that provides many application-specific functions to the trunking network. The fixed host, is a TCP/IP based application that can send or receive short data messages, namely providing a fixed wire-line access point for group SDS messages.

The fixed host 74 is connected to a short message service centre (SMSC) 78 via a transfer control protocol (TCP)/internet protocol (IP) interface 76. The SMSC 78 is a standard piece of GSM equipment that is responsible for delivering point-to-point SDS messages within a cellular telecommunications environment. It is a database with SS7 protocol stacks layered upon it. The SMSC 78 is also connected to the PSTN 34, which is operably coupled to home location register (HLR) 80.

A short message (SMS) typically constitutes an indication of the calling or called party of the message, with a protocol identifier, message reference number, (optionally) a timestamp, control parameters for reporting, and the actual user data payload itself. Such short data messages may originate from either an MS or a fixed host.

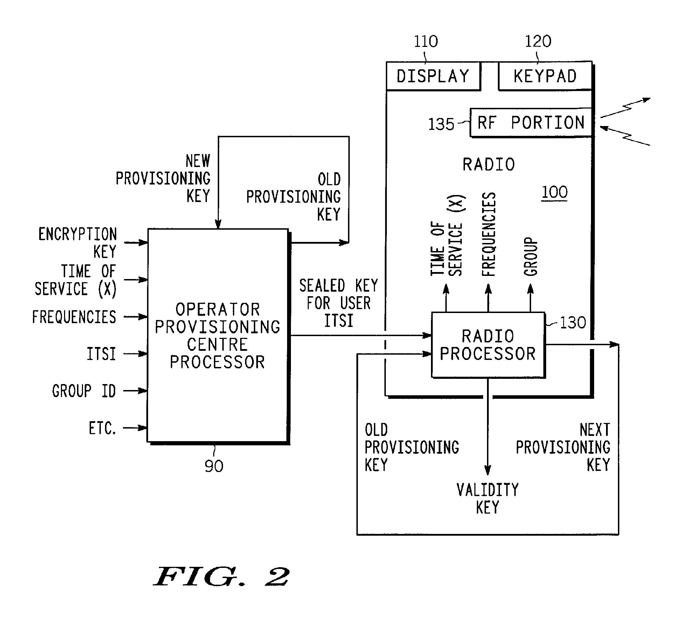

Referring now also to FIG. 2, the invention embodiment provides a new method and an algorithm that allows provisioning of secure DMO communications for a predefined service period of usage. As a result of the new method, the user has privacy of communication, the operator has the ability to charge for the service, and the user does not have to visit a service station or other outlet in order to purchase the service.

In the new method, service provisioning is carried out as for TMO provisioning, by the network operator at an operator provisioning centre and is based on dividing the year into N service periods, say for example 12 service periods of one month, where the user (subscriber) buys service time for secure DMO communications of up to a maximum number of hours, X hours, per service period (the price being dependent on the amount of time requested). Each group of two or more users who wish to communicate together is registered with the operator and is given its own group identity, e.g. a group identification number, which may be used by the mobile stations of the group members to establish communication between the group members. Each such group also has for secure communications in DMO its own own encryption key in each service period. The information communicated by the secure DMO route between the group members will often be speech of the group members but it may also comprise information in other forms, e.g. data and/or picture or video information. The information to be sent by the mobile stations may be in digital or analogue form, preferably digital.

At the end of each service period, assuming a user who is a member of such a group has paid the operator to send and receive secure DMO communications, an encryption key will be distributed to the user for use by the user in the user's group in the next service period. Any user having such an encryption key is able to communicate by encrypted DMO communications with the rest of his or her group members who also have the key for up to X hours in a service period.

Management of the timing of the secure DMO communications by a given user is carried out by the user's mobile station, for example radio 100. For convenience, at any given moment the user is able to see on a display 110 on the radio 100 how much service time the user has already used and/or how much service time is left for secure DMO communications.

The procedure for distributing a sealed key (for use in encrypted DMO communications) to a designated user when the user has paid for service time in a given period is carried out in the following manner illustrated in Figure 2:
1. An operator provisioning centre includes a processor 90 which executes an algorithm referred to herein as EPA (Encryption and Provisioning Algorithm). This algorithm seals an encryption key so that it may be sent to the designated user who has purchased the new key and the associated service time. The inputs required to the EPA are the following parameters:
   (i) The amount of purchased service time;
   (ii) The identity (ITSI) of the radio of the designated user;
   (iii) The encryption key for use by the user group;
   (iv) The channel frequency or frequencies for use by the user group;
   (v) The user group call identification (ID) number;
   (vi) The provisioning key (stored for each user in a database at the provisioning centre of the system). For an existing user this is the most recently used encryption key. For a new user, a new provisioning key is issued when the user is registered with the operator.
   (vii) Other optional parameters;
2. The output of the EPA is a sealed key (SK) in which is hidden the encryption key. The SK can be distributed freely to the designated user by any method including any insecure method (e-mail, internet, telephone, SMS, etc.)
3. The designated user receives the SK and enters it into the radio 100 (via a keypad 120 on the radio 100).
4. The radio 100 has a processor 130, e.g. a digital signal processor, which (amongst other things) is programmed to perform a reverse EPA algorithm 130 which is an algorithm which is the reverse of algorithm EPA 130, taking as inputs the SK which has been input by the user and the provisioning key which is stored in a memory of the processor 130. If the user is a new one, the new provisioning key also has to be entered into the memory, e.g. via the keypad 120. The radio 100 produces as an output from the reverse EPA operation the encryption key required for secure DMO communications together with a validity key to indicate via the display 110 to the user that the encryption key has been validly generated. A record of the encryption key is retained internally within the memory and is automatically applied by the processor of the radio 100 when a secure DMO communication is being established.

It should be noted that attempting to enter an old sealed key will not allow the user to extend the use of the service period nor to receive extra service time, since a provisioning key as well as the new sealed key is required for each new service period.

It should also be noted that the above described method avoids the necessity to recall the radio to a service station (which simplifies matters for the user).

In order to allow the radio 100 to understand previous communications (from radios which are still using the previous encryption key), the memory of the processor 130 keeps a record of both the previous and the new encryption keys, enabling it to decode transmissions encrypted with either the new encryption key or the previous encryption key. This procedure allows the user to have encrypted DMO communications over two adjacent service periods. It should be noted that the radio of a user with only an old encryption key cannot with such a procedure decode a communication sent with a new one, which will encourage the user to purchase the new encryption key required for the next service period (i.e., to purchase the next SK from the operator). It should also be noted that by this procedure accumulation of service time over consecutive periods is limited to time in two consecutive service periods In other words, if the user has purchased X hours service time for use in encrypted DMO, the user will be able to use this time in two consecutive periods only. The limitation of both the service time (X hours) and periods of usage are therefore tools of the operator to control and charge for the service of secure DMO operation.

The radio 100 includes a RF portion 135, which may be a known sub-system per se, coupled to the processor 130, by which radio communications including encrypted communications as described herein are sent to and received from other similar mobile radio units by DMO.

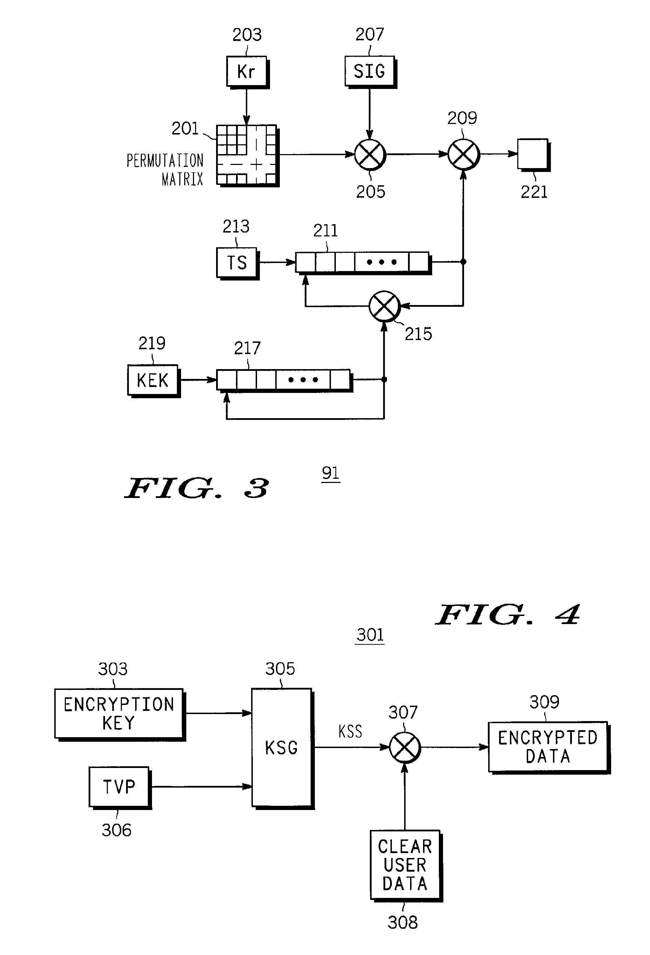

Figure 3 illustrates a processing unit 91 which comprises one form of the processor 90 (Figure 2) for producing an encryption and provisioning algorithm (EPA) as referred to earlier. The unit 91 may be incorporated in the computing hardware of a service operator provisioning centre. The unit 91 comprises a permutation matrix 201 having an individual key input 203 designating the individual radio 100 (Fig. 2) to be provided with secure DMO operation. The permutation matrix 201 delivers its output to an exclusive OR gate 205 to which an input 207 is also applied. The input 207 comprises a signal representing a crypto signature. The output of the gate 205 is delivered as an input to an exclusive OR gate 209 to which an input from a linear feedback shift register 211 is also applied. The register 211 receives as an input a time stamp signal 213 providing an initial value of the register 211 and an output from an exclusive OR gate 215 having as respective inputs the output of the register 211 fed back to the gate 215 and an output of a linear feedback shift register 217. The register 217 receives as inputs a key encryption key 219 which provides an intial value of the register 217 and the output of the register 217 fed back as an input.

The output from the unit shown in Figure 3 comprises a sealed key 221 which comprises a number in which is hidden the key encryption key together with a sealed signature identifying the radio of the designated user and a time stamp for designating the time of provisioning the key encryption key.

The processor 130 (Figure 2) is operable to apply an algorithm which is reverse of the EPA generated by the unit shown in Figure 3 so that the key encryption key 219 is extracted from the sealed key 221 and is then usable by the processor 130 to enable the radio 100 to make secure DMO communications.

Figure 4 shows operation of a processor 301 which may be used within each radio unit such as the radio 100 to construct encrypted messages. An encryption key 303 extracted by the processor 130 (Figure 2) from the sealed key sealed by the EPA in the manner shown in Figure 3 is applied as an input to a key steam generator or KSG (crypto algorithm unit) 305 together with a time variable parameter or TVP (timestamp) and using this information the KSG 305 generates a bit-pattern known in the art as a key stream (crypto) sequence or KSS in a known manner. The output of the unit 305 comprising this sequence is applied as an input to an exclusive OR gate 307 by which it is combined with clear or unencrypted data signals representing information input by the user (e.g. known in the art as 'plaintext'). The output of the gate 307 comprises encrypted data or so called 'cipher text' which comprises signals in encrypted form containing the user input information which may be transmitted by DMO to one or more other target radios where the signals may be de-encrypted by a reverse procedure.

The control by a system operator over use of radio units in DMO secure communications as in the embodiments of the invention described herein may be used by two or more subscribers as a group as follows. Whenever one user or subscriber has obtained authorization from the operator to use the system and has purchased service time from the operator, one or more other users can join a secure talk group with that particular user also by obtaining authorization to use the system and purchasing appropriate service time from the operator as well. In addition, they can later remove themselves from the group by not purchasing service time for the next period. However, it is possible for the service operator to allow one user to purchase the service on behalf of one or more other members of the group (e.g. by paying an increased charge according to the group size). In both cases, each individual user will receive his/her individual notification granting access to the service for the appropriate operating period (e.g. the next calendar month). Where one user purchases the service on behalf of one or more, he/she may provide the list of radio ID's of his/her group to the operator and, after he/she has been charged, the sealed key and authorisation to use the secure DMO system will be distributed to each group member individually in one of the ways described earlier. Each service authorisation issued in this way will be unique for each radio unit based on its unique ID and will not be useable with any other radio unit.

## Claims

1. A radio transceiver unit (100) for use in a radio communications system and operable in a direct mode, the radio transceiver unit comprising:
means (120) for receiving encrypted information including a communication encryption key for use in DMO (direct mode operation) communications;
means for processing (130) the received encrypted information to derive the encryption key included therein; and
means (135) for conducting encrypted direct mode operation using the communication encryption key, wherein the encrypted information received and processed by the unit includes a code which is unique to that unit whereby only that unit may extract the communication encryption key and wherein the unit is operable using the key for use in direct mode operation for a cumulative time up to a pre-determined finite time of service.

2. A radio transceiver unit according to claim 1 and wherein the unit is operable using the key for use in DMO only in a given operation period.

3. A radio transceiver unit according to claim 1 or claim 2 and wherein the unit is operable to communicate in DMO with one or more other radio transceiver units in a group permitted to use the communication encryption key and the unit is operable to send to or receive from the other one or more units communications encrypted or de-encrypted using the encryption key.

4. A radio transceiver unit according to claim 1,claim 2 or claim 3 and which is a dual mode transceiver which is operable in a trunked mode of operation (TMO) as well as in DMO.

5. A radio transceiver unit according to any one of the preceding claims and wherein the information received in operation by the means for receiving includes additional information indicating one or more of:
(i) at least one operating frequency;
(ii) a group identification, and
(iii) a predetermined time of service for use in a predetermined operating period;
and the unit is operable to extract the indicated information and to apply the extracted information in establishment of a DMO encrypted communication.

6. A radio transceiver unit according to any one of the preceding claims and wherein the encrypted information comprises information which has been put into a sealed key message by application of an algorithm by a remote processor and the radio transceiver unit is operable to apply an algorithm which is a reverse of that applied by the remote processor to extract the communication encryption key.

7. A radio transceiver unit according to any one of the preceding claims and wherein the unit is operable to issue a validity signal when the encryption key has been validly extracted.

8. A radio transceiver unit according to any one of the preceding claims and wherein the unit is operable to store the encryption key in a memory.

9. A radio transceiver unit according to any one of the preceding claims and wherein the means for processing employs as an input in addition to the encrypted information a provisioning key which when an encryption key has been used in a previous service period comprises the encryption key for the previous service period.

10. A radio transceiver unit according to any one of the preceding claims and which is operable to hold in a memory a communication encryption key for use in direct mode communication in a new or current service period as well as a communication encryption key for use in direct mode communication in the service period immediately prior to the current or new period and to carry out direct mode communication for a cumulative time up to a predetermined time of service during the new or current service and its immediately prior period.

11. A radio transceiver unit according to any one of the preceding claims and further comprising a display for indicating at least one of:
(i) the amount of time of a predetermined time of service authorised for encrypted DMO operation by the unit which has already been used; and
(ii) the amount of time of a predetermined time of service authorised for encrypted direct mode operation use by the unit which still remains available.
(iii) the validity of entry of encrypted information containing a communication encryption key.

12. A radio transceiver unit according to any one of the preceding claims and wherein the means for receiving the encrypted information comprises input key means for entering the encrypted information as a set of characters.

13. A radio transceiver unit according to any one of the preceding claims and wherein the means for conducting encrypted DMO communication comprises a processor for using the communication encryption key to convert signals representing input information applied by a user or from a peripheral device associated with the radio unit data, into encrypted signals for transmission to one or more designated other radio units by encrypted DMO.

14. A radio transceiver unit according to claim 13 and wherein the processor comprising the means for conducting encrypted DMO communication is operable to produce an encrypted data sequence by combining the communication encryption key in a signal combiner together with a signal representing information in unencrypted form to be converted by the signal combiner to an encrypted form.

15. A radio transceiver unit according to claim 14 and wherein the signal combiner comprises an exclusive OR function operator.

16. A radio transceiver unit according to any one of the preceding claims and wherein the signal processing operations of the unit are carried out digitally.

17. A radio transceiver unit according to any one of the preceding claims and wherein the unit is operable according to TETRA standard procedures.

18. A communications control and application system, comprising:
means for compiling for use by a designated radio transceiver unit of the system a sealed key message of encrypted information including a communication encryption key for use by the designated unit in direct mode communication; and a radio transceiver unit operable to receive and extract the encrypted information, wherein the radio transceiver unit is a unit according to any one of the preceding claims.

19. A system according to claim 18 which includes a plurality of radio transceiver units each of which is a unit according to any one of claims 1 to 17 and wherein the means for compiling and sending the sealed key message is operable to apply an encryption algorithm known to the radio transceiver units and wherein the designated radio transceiver unit to which the signal containing the encrypted message is directed is operable to apply a de-encryption algorithm corresponding to the encryption algorithm to extract the communication encryption code.
